# EUROPÄISCHE PATENTSCHRIFT

(11) **EP 2 464 825 B1**
(45) Veröffentlichungstag und Bekanntmachung des Hinweises auf die Patenterteilung: **09.04.2014**
(21) Anmeldenummer: 10747945.3
(22) Anmeldetag: 02.08.2010
(51) Int. Cl.: E21F 13/06, B65G 23/06

(54) **UMKEHRSTATION FÜR EINEN KETTENKRATZERFÖRDERER UND KETTENRADANORDNUNG HIERFÜR**
TAIL STATION FOR A SCRAPER CHAIN CONVEYOR AND CHAIN WHEEL ASSEMBLY THEREFOR
STATION DE RENVOI POUR UN CONVOYEUR À CHAÎNE À RACLETTES ET ENSEMBLE PIGNON À CHAÎNE ASSOCIÉ

(30) Priorität: 14.08.2009 DE 202009005143 U
(43) Veröffentlichungstag der Anmeldung: 20.06.2012
(73) Patentinhaber: Caterpillar Global Mining Europe GmbH, 44534 Lünen (DE)
(72) Erfinder: SCHÜRER, Karl-Heinz, 44623 Herne (DE); HÖPPE, Armin, 44801 Bochum (DE); VOIGT, Robert, 44809 Bochum (DE)
(74) Vertreter: Kramer - Barske - Schmidtchen
(86) Internationale Anmeldenummer: PCT/IB2010/053498
(87) Internationale Veröffentlichungsnummer: WO 2011/018731

(56) Entgegenhaltungen:
- DE-A1- 3 507 674
- DE-U1- 29 915 798
- US-B1- 6 227 354

## Beschreibung

Die Erfindung betrifft eine Umkehrstation für einen Kettenkratzerförderer, insbesondere eine Umkehrstation für einen Übergabeförderer, mit einem Maschinenrahmen mit randoffenen Lageraufnahmen für eine demontierbare Kettenradanordnung, mit einer Kettenradanordnung mit Kettenradwelle, Umkehrkettenrad sowie Lagerschalen zur drehbaren Lagerung der Kettenradwelle, und vorzugsweise mit wenigstens einem dem Umkehrkettenrad zugeordneten Kettenabweiserelement. Die Erfindung betrifft ferner eine Kettenradanordnung für eine Umkehrstation mit einer Kettenradwelle, mit einem Umkehrkettenrad und mit Lagerschalen zur drehbaren Lagerung der Kettenradwelle.

Im untertägigen Bergbau kommen Kettenkratzerförderer als Strebförderer, Streckenförderer oder Übergabeförderer zum Einsatz, um die mit einem Gewinnungsgerät hereingewonnen Mineralien wie z.B. Kohle zum Einen aus dem Streb herauszufördern und zum Anderen an einen Streckenförderer, insbesondere einen Bandförderer, zu übergeben, mit dem das Material über große Strecken transportiert wird. Während Strebförderer in der Regel an beiden Enden mit Antriebsstationen versehen sind, kommt beim Streckenförderer und insbesondere beim Übergabeförderer an einer Seite nur eine Umkehrstation zum Einsatz, die sich von einer Antriebsstation dadurch unterscheidet, dass das Umkehrkettenrad bzw. die diese tragende Kettenradwelle nicht mit einem Antrieb gekoppelt ist. Die Umkehrstation eines Übergabeförderers kann vor allem als sogenannter Kreuzrahmen ausgebildet sein, bei welchem insbesondere der Bauraum für das Umkehrkettenrad und die diese tragende Kettenradwelle relativ eng ist.

Gattungsgemäße Umkehrstationen, auch in Ausgestaltung eines Kreuzrahmens, sind dem Fachmann für den untertägigen Bergbau bekannt. Grundsätzlich ist es möglich, auch in der Umkehrstation dieselbe Kettenradwelle bzw. Kettenradanordnung wie in einer Antriebsstation zu verwenden und dies wird z.B. in der DE 20 2004 013 198 U1 beschrieben. Aus der DE 42 00 565 A1 ist ferner bekannt, die Übergabestation derart auszugestalten, dass der Maschinenrahmen wahlweise für den Linksanschluss oder den Rechtsanschluss eines Streckenförderers einsetzbar ist.

Aus der DE 100 50 699 C1 ist bekannt, die Antriebswelle einer Fördererantriebsstation mittels Adapterplatten höhenverstellbar an einem Maschinenrahmen zu lagern. Die Höhenverstellbarkeit erfolgt mittels Langlöchern in den Adapterplatten sowie in den Maschinenrahmen eingeschraubter Gewindeschrauben.

Aus der DE 35 07 674 A1 ist ein Kettenradsatz für einen Kettenkratzerförderer bekannt, dessen Antriebs- oder Umkehrstationen mit zum Kopfende offenen, schlitzartigen Lageraufnahmen versehen ist, in welche die Kettenradanordnung vom Kopfende der entsprechenden Station her einsetzbar ist. Die Lagesicherung der Kettenradanordnung innerhalb der Lageraufnahmen erfolgt mittels Bolzen, die an der Kettenradanordnung im Abstand voneinander befestigt sind und deren Schäfte durch entsprechende Löcher in einer quer liegenden Platte durchgreifen, die sich bezogen auf den Kettenradsatz zwischen den Kettenbandabschnitten des am Kettenrad umgelenkten Kettenbandes befindet.

Aus der DE 299 15 798 U1 ist eine Antriebsstation mit einer von der Kopfseite her befestigbaren Kettenradanordnung bekannt, bei der die Lagerschalen zur Kopfseite des Maschinenrahmens der Umkehrstation abgeflacht sind, um die Kettenradanordnung mittels Verschlusselementen zu halten, die am Kopf des Maschinenrahmens mittels Schraubverbindungen befestigt sind.

Aufgabe der Erfindung ist es, eine Umkehrstation insbesondere für Hochleistungsförderer zu optimieren und dabei den Austausch einer Kettenradwellenanordnung zu erleichtern.

Diese Aufgabe wird erfindungsgemäß bei einer Umkehrstation dadurch gelöst, dass die Lageraufnahmen an mit dem Maschinenrahmen verbundenen Kragarmen ausgebildet sind und nach oben offen sind, wobei die Kettenradwelle mit Lagerböcken an den Lagerschalen versehen ist, die mit horizontalem Bewegungsspiel in die Lageraufnahmen einsetzbar sind und in den Lageraufnahmen zwischen einer Entnahmeposition und einer Riegelposition horizontal verschiebbar sind. Durch den Einsatz von Kragarmen mit nach oben offenen Lageraufnahmen kann, anders als z.B. nach der DE 20 2004 013 198 U1, der Austausch der Kettenradwelle selbst bei minimal zur Verfügung stehendem Bauraum von oben erfolgen. Durch das horizontale Bewegungsspiel kann zugleich auf einfache Weise eine drehmomentschlüssige Verriegelung der Kettenradanordnung am Maschinenrahmen bzw. das Lösen dieser drehschlüssigen Verriegelung erreicht werden, wobei durch die Horizontalverschiebung ggf. sogar vollständig auf zusätzliche Bolzensicherungen oder Schraubsicherungen verzichtet werden kann.

Bei der insbesondere bevorzugten Ausgestaltung weisen die Lagerschalen Innenseiten mit einer Durchgriffsöffnung für die Kettenradwelle und Außenseiten auf, an denen die Lagerböcke als axiale Endzapfen der Kettenradanordnung ausgebildet sind. Diese Maßnahme sorgt für eine Minimierung der notwendigen Länge der Kettenradwelle und schon durch diese Maßnahme für eine Gewichtseinsparung, da im Gegensatz zum Stand der Technik, bei dem die Lagerschalen selbst in den Lageraufnahmen aufgenommen wurden, nun die großvolumigen und Lager aufnehmenden Lagerschalen weiter innen liegen können. In bevorzugter Ausgestaltung erfolgt das Verschieben oder zumindest das Verriegeln der Lagerböcke in der Riegelposition mittels Keilelementen, die im Montagezustand zusammen mit den Lagerböcken die Lageraufnahmen dann vollständig formschlüssig ausfüllen. Zum Zusammenwirken mit den Keilelementen ist besonders vorteilhaft, wenn die Lageraufnahmen jeweils einen im Wesentlichen rechteckförmigen Querschnitt mit Stirnwand, Rückwand sowie einer Bodenwand aufweisen, und wenn jeder Lagerbock mit einer Vorderkante, einer Bodenkante und einer Hinterkante versehen ist, wobei die Hinterkante mit einer Schräge ausgeführt ist, mit der dann die Keilschräge des Keilelementes zusammenwirken kann. Durch Einschieben oder Einschlagen eines Keilelementes insbesondere von oben kann die Horizontalverschiebung der Lagerböcke und damit der gesamten Kettenradanordnung auf relativ einfache Weise erreicht werden und zugleich wird verhindert, dass, solange sich die Keilelemente zusammen mit den Lagerböcken in der Lageraufnahme befinden, ein Lösen erfolgen kann. Die Anordnung der Keilschräge an der Hinterkante nutzt aus, dass das Umkehrkettenrad ohnehin nur auf Zug beansprucht wird und insofern immer in Richtung des Kettenkratzförderers bzw. Übergabeförderers gezogen wird.

Gemäß einer insbesondere vorteilhaften Ausgestaltung sind die Lagerschalen zumindest an einer Seite mit einer im Wesentlichen ebenen Stirnfläche versehen, an der wenigstens ein Vorsprung zur Drehmomentabstützung ausgebildet ist, der in der Riegelposition an einer maschinenrahmenseitigen Stützschulter bzw. Stufe anliegt. Die Drehmomentabstützung der Kettenradanordnung erfolgt mithin ausschließlich über die Lagerschalen, wobei die Drehmomentabstützung nur dann wirksam ist, wenn sich die Lagerböcke der Kettenradanordnung in der Riegelposition befinden. Das Horizontalverschieben der Lagerböcke bzw. der Kettenradanordnung in die Entnahmeposition löst mithin sogleich auch die Drehmomentabstützung für die Kettenradanordnung. Weiter vorteilhaft ist, wenn die Kragarme und/oder der Stützblock lösbar am Maschinenrahmen befestigt sind. Insbesondere diese Maßnahme ermöglicht in besonders vorteilhafter Ausgestaltung, dass derselbe Maschinenrahmen ggf. auch als Antriebsstation eingesetzt werden kann, indem die Kragarme derart positioniert sind, dass sie einen geringeren Abstand voneinander aufweisen als z.B. Lagerschalenaufnahmen in den Seitenwangen eines Maschinenrahmens. Je kürzer der Abstand der Kragarme voneinander ist, desto geringer fällt insgesamt das Gewicht der Kettenradanordnung aus. Besonders vorteilhaft ist, wenn zumindest die beiden Kragarme Bestandteil einer Konsole sind, die austauschbar am Maschinenrahmen befestigbar, insbesondere anschraubbar ist.

Der Aufbau einer Umkehrstation nebst Austausch verschleißanfälliger Teile wird auch dadurch erleichtert, dass gemäß einer besonders vorteilhaften Ausgestaltung, die ggf. von eigenständiger erfinderischer Bedeutung ist, die Kettenabweiserelemente mit wenigstens einer Abweiserzunge an einer Elementstirnseite und mit einem Riegelansatz an einer Elementrückseite versehen sind. Die Abweiserzungen erstrecken sich vorzugsweise sichelförmig an der Elementstirnseite, so dass das Kettenabweiserelement sowohl im Ketteneinlauf als auch im Kettenauslauf wirksam ist. Insbesondere vorteilhaft ist dann, wenn eine Deckplatte vorgesehen ist, die im Montagezustand die Lageraufnahmen übergreift und die Riegelansätze übergreift, wodurch ggf. ausschließlich über die Deckplatte sowohl das Lösen der Keilelemente zum Verhindern eines ungewollten horizontalen Verschiebens der Lagerböcke und damit der Kettenradwellenanordnung als auch ein Lösen der Kettenabweiserelemente verhindert werden kann. Um mit der Deckplatte ein Einspannen der Riegelansätze und Halten der Kettenabweiserelemente durch Formschluss zu erreichen, ist besonders vorteilhaft, wenn der Riegelansatz mit wenigstens einer Nut, insbesondere einer Halbrundnut an der unteren und ggf. auch an der oberen Querseite versehen ist, mit der das Kettenabweiserelement zum Ein-und Ausschwenken auf einer maschinenrahmenseitigen Rundleiste aufgesetzt werden kann. Durch Formschluss wird dann zugleich eine Bewegung des Kettenabweiserelementes in Kettenbewegungsrichtung verhindert. Der Riegelansatz lässt sich dann bei montierter Deckplatte zwischen der Unterseite der Deckplatte und einer Bodenleiste einspannen und durch Formschluss sichern. Der Austausch der Kettenabweiserelemente kann dann erfolgen, ohne dass die Kettenradanordnung demontiert oder bewegt werden muss. Die Rundleiste und die Stützleiste für die Kettenabweiserelemente können sämtlich an der Konsole ausgebildet sein.

Die erfindungsgemäße Aufgabe wird auch durch eine Kettenradanordnung für eine entsprechende Umkehrstation gelöst, bei der erfindungsgemäß vorgesehen ist, dass die Lagerschalen an Außenseiten mit Lagerböcken versehen sind, die axiale Endzapfen der Kettenradanordnung bilden und in Lageraufnahmen an der Umkehrstation von oben einsetzbar sind. Bei der Kettenradanordnung ist besonders vorteilhaft, wenn die Lagerschalen zumindest an einer Seite mit einer im Wesentlichen ebenen Stirnfläche versehen sind, an der wenigstens ein Vorsprung zur Drehmomentabstützung ausgebildet ist und/oder wenn die Lagerböcke mit einer Vorderkante, einer Bodenkante und einer Hinterkante versehen sind, wobei die Hinterkante mit einer Schräge versehen ist.

Weitere Vorteile und Ausgestaltungen einer erfindungsgemäßen Umkehrstation sowie einer Kettenradanordnung ergeben sich aus der nachfolgenden Beschreibung von schematisch in der Zeichnung gezeigten bevorzugten Ausführungsbeispielen. In der Zeichnung zeigen:
- **Fig. 1**: perspektivisch, teilweise aufgebrochen, eine erfindungsgemäße Übergabestation in Ausgestaltung als Kreuzrahmen mit montierter Kettenradanordnung für das Umkehrkettenrad bei abgehobener Deckplatte;
- **Fig. 2**: in Seitenansicht, teilweise aufgebrochen, einen der Kragarme mit montierter Kettenradwelle in Entnahmeposition gemäß einer ersten Ausführungsvariante;
- **Fig. 3**: in derselben Ansicht wie Fig. 2 den Kragarm gemäß der ersten Ausführungsvariante mit Kettenradwelle in Riegelposition bei montierter Deckplatte;
- **Fig. 4**: einen Vertikalschnitt durch eine der Lageraufnahmen mit der Kettenradwelle in Entnahmeposition;
- **Fig. 5**: in Schnittansicht durch eine der Lageraufnahmen die Kettenradwelle in Riegelposition bei montierter Deckplatte;
- **Fig. 6**: einen Vertikalschnitt durch die Kettenradwelle in der Ebene eines Kettenabweisers;
- **Fig. 7**: perspektivisch die beim ersten Ausführungsbeispiel eingesetzte, am Maschinenrahmen lösbar befestigbare Konsole;
- **Fig. 8**: in Seitenansicht, teilweise aufgebrochen, einen der Kragarme mit montierter Kettenradwelle in Schließposition gemäß einer zweiten Ausführungsvariante;
- **Fig. 9**: ein bei der zweiten Ausführungsvariante eingesetztes Keilelement in Ansicht auf die Geradseite des Keilelementes, teilweise aufgebrochen;
- **Fig. 10**: das Keilelement aus Fig. 9 in Seitenansicht, teilweise aufgebrochen;
- **Fig. 11**: das Keilelement aus Fig. 9 in Draufsicht;
- **Fig. 12**: eine Detailansicht der Schraubensicherung des Keilelementes in Fig. 8; und
- **Fig. 13**: den bei der zweiten Ausführungsvariante verwendeten Spannbolzenhaltedübel in Seitenansicht.

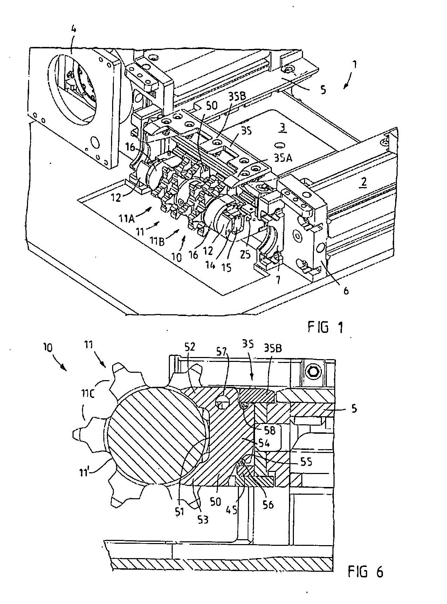

In Fig. 1 ist insgesamt mit Bezugszeichen 1 eine erfindungsgemäße Übergabestation für einen Übergabe-Kettenkratzförderer bezeichnet. Die Übergabestation 1 ist als Kreuzrahmen ausgebildet, an der sich die Kettenstränge wie Förder- sowie Rücklauftrume eines Strebförderers, dessen Obertrum mit Bezugszeichen 2 bezeichnet ist, und eines Übergabeförderers, dessen Obertrum tiefer liegt als der Obertrum 2 des Strebförderers und in Fig. 1 mit Bezugszeichen 3 bezeichnet ist, kreuzen. Die Kettenstränge des Strebund Übergabeförderers, die jeweils aus einer Doppelmittenkette mit an deren Horizontalgliedem angeschlossenen Kratzern als Mitnahmeelemente bestehen, sind in den Figuren nicht dargestellt. Der Kreuzrahmen weist als zentrales Teil einen Maschinenrahmen 5 auf, an dem die jeweiligen Obertrume 2, 3 und Untertrume ausgebildet sind. Für den Strebförderer ist am Fig. 1 linken, hinteren Ende des Maschinenrahmens ein Aufnahmekopf 4 für eine Lagerwelle für den nicht gezeigten Kettenstern des Strebförderers angeordnet, wobei dieser Aufnahmekopf 4 vorzugsweise lösbar an dem zentralen Maschinenrahmen 5 befestigt ist. Am Fig. 1 rechten Ende ist ein Anschlussstück 6 lösbar am Maschinenrahmen 5 angeschlossen, an dem die einzelnen Rinnenschüsse (nicht dargestellt) des Strebförderers angeschlossen werden können und am in Fig. 1 rechten hinteren Ende des Maschinenrahmens 5 können Rinnenschüsse für den Übergabeförderer angeschlossen werden, um mit einer im Übergabeförderer umlaufenden Kratzerkette das vom Obertrum 2 in den Obertrum 3 des Übergabeförderers hereinfallende Material aus der Zeichnungsebene nach hinten abzutransportieren und dann z.B. an einen Bandförderer als Streckenförderer zu übergeben, wie dies an sich dem Fachmann im untertägigen Bergbau für Übergabeförderer bekannt ist.

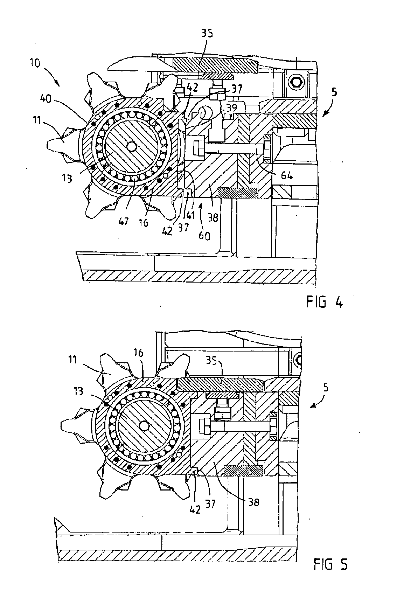

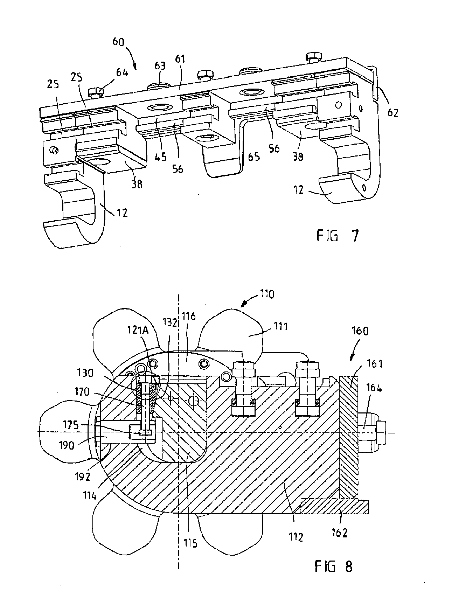

Aus Fig. 1 ist ersichtlich, dass im gezeigten Ausführungsbeispiel der Maschinenrahmen 5 auch an der Kopfseite des Obertrums 3 des Übergabeförderers mit kopfseitig randoffenen Lagermulden 7 versehen ist, in die eine übliche Kettenradwelle mit Antriebskettenrad vom Kopf her montiert und demontiert werden könnte. Im gezeigten Ausführungsbeispiel hingegen sind die Lagermulden 7 funktionslos, da eine das Umkehrkettenrad 11 aufweisende Kettenradanordnung 10 beidenends an Kragarmen 12 abgestützt ist, welche hier lösbar mittels einer in Fig. 7 im Detail gezeigten und weiter unten noch beschriebenen Konsole 60 am Maschinenrahmen 5 befestigt sind. Das Umkehrkettenrad 11 ist mit zwei Kettensternen 11A sowie 11B versehen, die über eine Distanzhülse voneinander beabstandet sind und drehfest auf einer Kettenradwelle (13, Fig. 4 und 5) sitzen, wie noch erläutert werden wird.

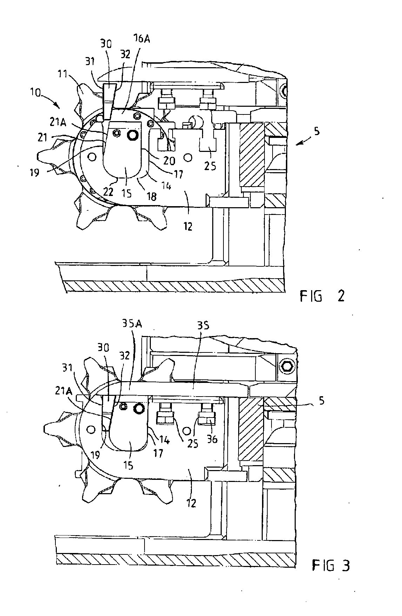

Beide Kragarmen 12 beim ersten Ausführungsbeispiel sind zur Verlagerung der Kettenradanordnung 10 mit im Querschnitt U-förmigen, taschenartigen Lageraufnahmen 14 versehen, die nach oben offen sind, damit die Kettenradanordnung 10 von oben in die Lageraufnahmen 14 in den Kragarmen 12 eingesetzt bzw. nach oben demontiert werden kann. Die Kettenradanordnung 10 sitzt hierbei in den Lageraufnahmen 14 mit Lagerböcken 15, die jeweils Endzapfen der Kettenradanordnung 10 bilden und jeweils an der Außenseite (16A, Fig. 2) von Lagerschalen 16 befestigt sind, in deren Innenraum die Kettenradwelle 13 mittels Lagerringen 17, wie wiederum die Fig. 4 und 5 zeigen, drehbar abgestützt ist.

Es wird nun zuerst Bezug genommen auf die Fig. 2 und 3, anhand deren die grundsätzliche Montage der Kettenradanordnung 10 an den Kragarmen 12 erläutert wird. In Fig. 2 ist der jeweilige Lagerbock 15 am Ende der Kettenradanordnung 10 in die zugehörige Lageraufnahme 14 bereits eingesetzt und befindet sich in einer Entnahmeposition. Die Lageraufnahme 14 mit rechteckförmigen Querschnitt weist eine Stirnwand 17, eine Bodenwand 18 und eine Rückwand 19 auf, wobei der Abstand von Stirnwand 17 und Rückwand 19 größer ist als die Breite des Lagerbocks 15 zwischen einer Vorderkante 20 und einer Hinterkante 21. Die Bodenkante 22 des Lagerbocks 15 liegt auf der Bodenwand 15 auf und durch die unterschiedlichen Abmessungen verbleibt ein horizontales Bewegungsspiel, um den Lagerbock 15 und insofern die gesamte Kettenradanordnung 10 aus der Entnahmeposition in Fig. 2 nach rechts in eine Riegelposition gemäß Fig. 3 verschieben zu können. Aus Fig. 2 ist ferner gut ersichtlich, dass die Hinterkante 21 fast über ihre ganze Höhe mit einer Schräge 21A versehen ist. Mit der Schräge 21A wirkt für die Montage bzw. die Sicherung des Lagerbocks 15 in der Riegelposition, wie in Fig. 3 gezeigt, ein Keilelement 30 zusammen, das eine gerade Keilrückseite 31 und eine schräge Keilstirnseite 32 hat, damit durch Einschlagen des Keilelementes 30 nach unten der Lagerbock 15 horizontal in der Lageraufnahme 14 verschoben werden kann. In der Riegelposition gemäß Fig. 3 ist der Lagerbock 15 in der Lageraufnahme 14 derart nach rechts verschoben, dass die Stirnkante 21 des Lagerbocks 15 an der Stirnwand 17 der Lageraufnahme 14 anliegt, während zugleich die Keilschräge 32 an der Schräge 21A und die Keilrückseite 31 an der Rückwand 19 der Lageraufnahme 14 anliegt. Um ein Herausbewegen des Keilelementes 30 aus der Riegellage nach oben zu verhindern, überdeckt eine Deckplatte 35 u.a. auch die Lageraufnahme 14 mit einem vorderen Deckschenkel 35A, der besonders deutlich aus Fig. 1 ersichtlich ist. Die Arretierung der Deckplatte 35 erfolgt u.a. am Kragarm 12 mittels Kopfschrauben 36, die in hinterschnittene und zu den Seiten der Kragarme 12 offene Langlöcher 25 einfassen. Die Kragarme 12 selbst können am Maschinenrahmen 5 angeschweißt oder lösbar mit diesem verschraubt sein. Die Lagerböcke 15 sind vorzugsweise an den Außenseiten 16A der Lagerschalen angeschraubt. Die Innenseiten der Lagerschalen sind mit Durchgriffsöffnungen für die Kettenradwelle 13 versehen.

Es wird nun Bezug genommen auf die Fig. 4 und 5, die jeweils Schnittansichten durch die Lagerschalen 16 zeigen, mittels denen die Kettenradwelle 13 über Lagerringe 47 drehbar am Maschinenrahmen 5 über die in den Fig. 4 und 5 nicht zu erkennenden Tragarmen abgestützt ist. Die Lagerschalen 16 weisen eine zylindrisch gewölbte Oberfläche 40 und eine im Wesentlichen ebene, in den Fig. 4 und 5 rechte Stirnfläche 41 auf, an deren oberen und unteren Ende jeweils ein Vorsprung 42 vorkragt. Am Maschinenrahmen 5 ist zugleich, hier zusammen mit einer Konsole 60 lösbar, ein Stützblock 38 angeschraubt, dessen Frontfläche 39 oben und unten mit einer Stufe 37 als Absatz versehen ist, wobei der Abstand der beiden Stufen 37 voneinander derart bemessen ist, dass die Vorsprünge 42 klammerartig auf die mit den Stufen 37 gebildeten Vertiefungen aufgeschoben werden können. Das Bewegungsspiel, mit dem die Lagerböcke 15 in den Lageraufnahmen 14 horizontal verschoben werden können, ist derart groß, dass in der Entnahmeposition, wie in Fig. 4 gezeigt, der untere Vorsprung 42 parallel zur Stirnfläche 39 angehoben werden kann; dass klammerartige Umgreifen bzw. Eingreifen in die Stufen 37 erfolgt nur in der Riegelposition, wie in Fig. 5 gezeigt. Die Lagerschalen 16 können mithin über die Vorsprünge 42 eine Drehmomentabstützung bzw. drehfeste Positionierung der gesamten Kettenradanordnung 10 am Maschinenrahmen 5 bewirken und zugleich die Lagerböcke 15 von den Drehkräften, die über die Kette und die Kettensterne des Umkehrkettenrades 11 in die Kettenradwelle 13 und insofern die Lagerschalen 16 eingeleitet werden, entlasten.

Es wird nun Bezug genommen auf die Fig. 1 und 6. Die nicht gezeigte Kratzerkette besteht in der Regel aus relativ schweren ösenartigen vertikalen und horizontalen Kettengliedern. Jeder Kettenstern des Umkehrkettenrades weist zwei voneinander beabstandete Kranzreihen auf, die zur Aufnahme der horizontalen Kettenglieder der Kratzerkette Taschen 11C bilden, wobei sich die vertikalen Kettenglieder in den Spalt zwischen den Kranzreihen legen können. Um das Einlaufen und Auslaufen der Kettenstränge in die Kettensterne des Umkehrkettenrades 11 zu verbessern, werden zusammen mit der Kettenradanordnung 10 Kettenabweiser 50 montiert, die einem relativ hohen Verschleiß unterliegen können und daher relativ regelmäßig ausgetauscht werden müssen. Bei der erfindungsgemäßen Umkehrstation 1 kommen Kettenabweiser 50 zum Einsatz, die bei montierter Kettenradanordnung 10 montiert bzw. demontiert werden können. Die Kettenabweiser 50 weisen, wie Fig. 6 zeigt, an einer Elementstirnseite 51 eine obere Abweiserzunge 52 und eine untere Abweiserzunge 53 und an einer Elementrückseite einen Riegelansatz 54 auf, der oben und unten jeweils mit einer Halbrundnut 55, 58 versehen ist. Die untere Nut dient als Rückhalteelement und Schwenkgelenk und kann auf eine Rundleiste 56 aufgesetzt werden, die an einer bodenseitigen Stützleiste 45 angeschweißt ist. Die Innenflächen der beiden Abweiserzungen 53, 52 sind kreisbogenförmig gewölbt, so dass sich die Zungen 52, 53 im Montagezustand des Kettenabweiserelementes 50 relativ nah an die Außenfläche 11' des Kettenrades 11 anlegen können. Die Abweiserzungen 52, 53 fassen hierbei jeweils in den Spalt oder Schlitz zwischen den beiden Kranzreihen der Kettensterne des Umkehrkettenrades 11 ein. Im Maschinenrahmen bzw. hier an einer u.a. den Stützblock 38 umfassenden, demontierbaren Konsole, wie noch beschrieben wird, ist eine Stützleiste 45 ausgebildet, oberhalb der ein Aufnahmeraum gebildet wird, der nach oben ausschließlich mittels der Deckplatte 35, und zwar einer rückwärtigen Leiste 35B der Deckplatte 35, überdeckt wird. Zur Demontage eines Kettenabweisers 50 reicht es mithin aus, die Deckplatte 35 zu demontieren und das Kettenabweiserelement 50 zuerst nach vorne und dann nach oben herauszuschwenken. Das manuelle Ausschwenken kann über die Grifföffnung 57 hinter der oberen Abweiserzunge 52 erleichtert werden, in die auch ein Haken eingehängt werden kann. Bei einem Doppelkettenkratzerförderer mit zwei Kettensternen kommen zwei Kettenabweiserelemente 50 zum Einsatz.

Fig. 7 zeigt die lösbar am Maschinenrahmen montierbare und sowohl die beiden Kragarme 12 als auch die Funktionselemente zum Anbringen der Deckplatte und zum Einschwenken der Kettenabweiserelemente enthaltende Konsole 60 im Detail. Die Konsole 60 weist eine Rückplatte 61 und eine Unterplatte 62 auf, an denen jeweils nahe der äußeren Enden der Konsole 60 die beiden Kragarme 12 vorkragend angeschweißt sind. Die Rückplatte 61 ist mit Positionierzapfen 63 versehen und wird von Schraubbolzen 64 durchgriffen, um die Konsole 60, wie z.B. in Fig. 4 gezeigt, am Maschinenrahmen 5 lösbar anzuschrauben. Auf einem Teilabschnitt der Unterplatte 62 sind jeweils die Stützleisten 45 angeschweißt, an denen wiederum die Rundleisten 56 als untere Schwenkhilfen und Rückhalteeinrichtungen angeschweißt sind. Jeweils benachbart zu einem Kragarm 12 ist der Stützblock 38 an der Konsole 60 angeschweißt und mittig ist ein weiterer Mittelblock 65 ausgebildet, wobei sich die Kettensterne des Kettenrades jeweils im Montagezustand zwischen dem Stützblock 38 und dem Mittelblock 65 befinden. Die Konsole 60 umfasst mithin sämtliche Elemente, die zur Anbringen der Kettenradwelle und der Kettenabweiserelemente einschließlich Anbringen der Deckplatte erforderlich sind, da die Nuten 25 in den Oberseiten der Kragarme 12 bzw. Stützblöcke 38 verlaufen.

Es wird nun Bezug genommen auf die Fig. 8 sowie 9 bis 13, in denen geringfügig modifizierte Kragarme 112 sowie geringfügig modifizierte Keilelemente 130 nebst Montagemitteln für die Keilelemente 130 dargestellt sind. Wie Fig. 8 zeigt, sind auch hier die Kragarme 112 an einer Konsole 160 angeschweißt, die eine Rückplatte 161 und eine Unterplatte 162 umfasst und die mittels Schraubbolzen 164 an einem hier nicht gezeigten Maschinenrahmen befestigt werden kann. Der Kragarm 112 weist wiederum eine nach oben offene, im Wesentlichen U-förmige Lageraufnahme 114 auf, in der eine hier nur angedeutete und das Kettenrad 111 tragende Kettenradanordnung 110 mittels an deren Lagerschalen 116 ausgebildeter Lagerböcke 115 montiert und befestigt werden kann. Auch hier weisen die Lagerböcke 115 eine geringere Breite auf als die Breite der Lageraufnahme 114, um die gesamte Kettenradanordnung 110 zwischen einer Entnahmeposition und einer Riegelposition horizontal verschieben zu können, wobei - wie beim vorherigen Ausführungsbeispiel - nur in der Riegelposition, wie in Fig. 8 gezeigt, Drehmomentabstützmittel an den Lagerschalen 116 in entsprechende Gegenanschlagmittel an der Lagerkonsole 160 einfassen.

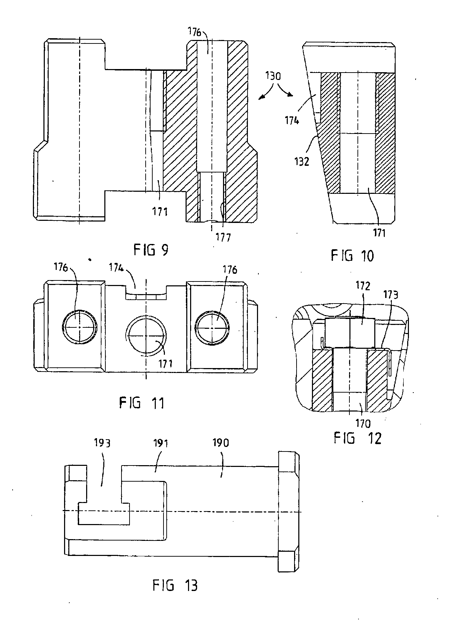

Abweichend vom vorherigen Ausführungsbeispiel kann hier allerdings das Keilelement 130 mittels eines Spannbolzens 170 tiefer nach unten in die Lageraufnahme 114 herabgezogen werden, um über die Keilschräge 132 und die Schräge 121A am Lagerbock 115 Kräfte aufbringen zu können, die die Lagerböcke 115 und damit die gesamte Kettenradanordnung 110 in Riegelposition selbst dann halten, wenn keine Deckplatte montiert ist. Wie besonders gut aus den Fig. 9 bis 11 ersichtlich ist, besteht das Keilelement 130 hier aus einem in Frontansicht etwa H-förmigen Körper, der mittig mit einer Durchgangsbohrung 171 versehen ist, die im Montagezustand des Keilelementes 130, wie in Fig. 8 und der Detailansicht in Fig. 12 gezeigt, von dem Spannbolzen 170 durchgriffen wird. Der Spannbolzen 170 weist an seinem einen Bolzenende einen Gewindeabschnitt auf, auf den eine Spannmutter 172 aufgeschraubt ist, die mit einem Laschenblech 173 gegen Lösen gesichert werden kann. Das Laschenblech 173 hat eine Dicke, die erlaubt, dass das Laschenblech mit den meist untertägig zur Verfügung stehenden Werkzeugen noch umgebogen werden kann, damit im Montagezustand der Laschensicherung das Laschenblech 173 mit einem Randlappen in eine Randaussparung 174 hineingebogen werden kann, die sich, der Durchgangsbohrung 171 gegenüberliegend, mittig und im oberen Bereich der Keilschräge 132 erstreckt. Damit das Keilelement 130 montiert bzw. demontiert werden kann, wird der Bolzenkopf 175 des Spannbolzens 170, wie in Fig. 8 gezeigt, mittels eines Haltedübels 190 am Kragarm 112 widergelagert. Der Haltedübel 190 kann hierbei mit seinem Dübelschaft 191 in eine Bohrung 192 eingeschoben werden, die sich von der Stirnseite des Kragarms 112 in die Lageraufnahme 114 hinein erstreckt. Der Dübelschaft 191 ist wiederum mit einer hinterschnittenen T-Nut 193 versehen, deren Breite im unteren, hinterschnittenen Bereich angepasst ist, den Bolzenkopf 175 des Spannbolzens 170 aufnehmen zu können, und die zugleich zu den Seiten offen ist, um den Spannbolzen bei demontiertem Keilelement 130 am Haltedübel 190 widerlagern zu können. Das Keilelement 130 ist ferner, hier zu beiden Seiten der Durchgangsbohrung 171, mit Gewindebohrungen 176 versehen, die hier nur partiell, nämlich nahe des unteren Ende des Keilelementes 130, mit einem Gewindegang 177 versehen sind, in die Lösebolzen eingeschraubt werden können, um das nach der Montage und insbesondere nach einem Betriebseinsatz meist festsitzende Keilelement 130 durch Einschrauben von zwei Lösebolzen (nicht gezeigt) gleichmäßig nach oben aus der Lageraufnahme 114 herausdrücken zu können. Im gezeigten Ausführungsbeispiel ist die Durchgangsbohrung 171 zusätzlich im oberen Abschnitt mit einem weiteren Gewindegang versehen, um dort z.B einen Lasthaken einschrauben zu können, über den das Keilelement zusätzlich noch nach oben herausgezogen werden kann.

Für den Fachmann ergeben sich aus der vorhergehenden Beschreibung zahlreiche Modifikationen, die in den Schutzbereich der anhängenden Ansprüche fallen sollen. Die Verriegelung der Lagerböcke in den Lageraufnahmen mittels Keilelement bildet die bevorzugte Ausgestaltung. Es könnten auch andere Klemmstücke zum Einsatz kommen. Die Keilflächen könnten auch unmittelbar an den Lagerböcken und den Lageraufnahmen ausgebildet sein und/oder das Ein- und Ausschieben erfolgt dergestalt, dass beim Absenken der Lagerböcke zugleich die Horizontalverschiebung eingeleitet wird. Die Horizontalverschiebung kann auch entlang einer Schräge oder über einen Sattel erfolgen

## Patentansprüche

1. Umkehrstation für einen Kettenkratzerförderer, insbesondere Umkehrstation für einen Übergabeförderer, mit einem Maschinenrahmen (5) mit randoffenen Lageraufnahmen für eine demontierbare Kettenradanordnung (10), mit einer Kettenradanordnung (10) mit Kettenradwelle (13), mit Umkehrkettenrad (11) sowie mit Lagerschalen (16) zur drehbaren Lagerung der Kettenradwelle (13), und mit wenigstens einem dem Umkehrkettenrad (11) zugeordneten Abweiserelement (50), **dadurch gekennzeichnet, dass** die Lageraufnahmen (14; 114) an mit dem Maschinenrahmen (5) verbundenen Kragarmen (12; 112) ausgebildet sind und nach oben offen sind, wobei die Kettenradanordnung (10; 110) mit Lagerböcken (15; 115) an den Lagerschalen (16; 116) versehen ist, die mit horizontalem Bewegungsspiel in die Lageraufnahmen (14; 114) einsetzbar sind und in den Lageraufnahmen (14; 114) zwischen einer Entnahmeposition und einer Riegelposition horizontal verschiebbar sind.

2. Umkehrstation nach Anspruch 1, **dadurch gekennzeichnet, dass** die Lagerschalen (16) Innenseiten mit einer Durchgriffsöffnung für die Kettenradwelle (13) und Außenseiten (16A) aufweisen, an denen die Lagerböcke (15) als axiale Endzapfen der Kettenradanordnung (10) ausgebildet sind.

3. Umkehrstation nach Anspruch 1 oder 2, **dadurch gekennzeichnet, dass** jeder Lagerbock (15; 115) mittels eines Keilelementes (30; 130) in der Lageraufnahme (14; 114) gegen horizontale Verschiebung sicherbar ist.

4. Umkehrstation nach einem der Ansprüche 1 bis 3, **dadurch gekennzeichnet, dass** die Lageraufnahmen (14) jeweils einen im Wesentlichen rechteckförmigen Querschnitt mit Stirnwand (17) und Rückwand (19) sowie Bodenwand (18) aufweist, und dass der Lagerbock (15) jeweils mit einer Vorderkante (20), einer Bodenkante (22) und einer Hinterkante (21) versehen ist, wobei vorzugsweise die Hinterkante (21) mit einer Schräge (21 A) versehen ist.

5. Umkehrstation nach einem der Ansprüche 1 bis 4, **dadurch gekennzeichnet, dass** die Lagerschalen (16) zumindest an einer Seite mit einer im Wesentlichen ebenen Stirnfläche (41) versehen sind, an der wenigstens ein Vorsprung (42) zur Drehmomentabstützung ausgebildet ist, der in der Riegelposition an einer maschinenrahmenseitigen Stützschulter (37) anliegt.

6. Umkehrstation nach Anspruch 5, **dadurch gekennzeichnet, dass** die Lagerschalen (16) zwei voneinander beabstandete Vorsprünge (42) aufweisen, die klammerartig auf einen Stützblock (38) am Maschinenrahmen (5) aufschiebbar sind.

7. Umkehrstation nach einem der Ansprüche 1 bis 7, **dadurch gekennzeichnet, dass** die Kragarme (12) und/oder der Stützblock (38) lösbar am Maschinenrahmen (5) befestigt sind.

8. Umkehrstation nach einem der Ansprüche 1 bis 7, **dadurch gekennzeichnet, dass** zumindest die beiden Kragarme (12; 112) Bestandteil einer Konsole (60; 160) sind, die austauschbar am Maschinenrahmen (5) befestigbar, insbesondere anschraubbar ist.

9. Umkehrstation nach einem der Ansprüche 1 bis 7, **dadurch gekennzeichnet, dass** die Kettenabweiserelemente (50) mit wenigstens einer Abweiserzunge (52, 53) an einer Elementstirnseite (51) und mit einem Riegelansatz (54) an einer Elementrückseite versehen sind.

10. Umkehrstation nach Anspruch 8, **gekennzeichnet durch** eine Deckplatte (35) die im Montagezustand die Lageraufnahmen (14) übergreift und die Riegelansätze (54) der Kettenabweiserelemente (50) übergreift.

11. Umkehrstation nach Anspruch 9 oder 10, **dadurch gekennzeichnet, dass** die Kettenabweiserelemente (50) ausschließlich durch Formschluss zwischen dem Riegelansatz (54), dem Maschinenrahmen (5) und der Deckplatte (35) gehalten werden, wobei vorzugsweise der Riegelansatz (54) mit wenigstens einer Halbrundnut (55; 58) für einen Schwenkeingriff oder Rückhalteeingriff an einer Rundleiste (56) versehen ist.

12. Umkehrstation nach einem der Ansprüche 1 bis 11, **dadurch gekennzeichnet, dass** zur Lagesicherung des Lagerbocks (115) in der Schließlage ein Keilelement (130) vorgesehen ist, das wenigstens eine oder genau eine Durchgangsbohrung (171) für einen Spannbolzen (170) aufweist, wobei vorzugsweise das Keilelement (130) zu beiden Seiten der Durchgangsbohrung (171) mit Gewindebohrungen (176) zum Einschrauben von Lösebolzen versehen ist.

13. Umkehrstation nach einem der Ansprüche 1 bis 12, **dadurch gekennzeichnet, dass** die Kragarme (112) mit einer Einstecköffnung (192) für einen Haltedübel (190) zum Widerlagern eines Spannbolzens (170) in der Lageraufnahme (114) versehen sind.

14. Kettenradanordnung für eine Umkehrstation nach einem der Ansprüche 1 bis 13, mit einer Kettenradwelle (13), mit wenigstens einem Umkehrkettenrad (11; 111) und mit Lagerschalen (16) zur drehbaren Lagerung der Kettenradwelle (13), **dadurch gekennzeichnet, dass** die Lagerschalen (16; 116) an Außenseiten (16A) mit Lagerböcken (15; 115) versehen sind, die axiale Endzapfen der Kettenradanordnung (10; 110) bilden und in Lageraufnahmen an der Umkehrstation von oben und mit horizontalem Bewegungsspiel einsetzbar sind, wobei die Lagerböcke (15) mit einer Vorderkante (20), einer Bodenkante (22) und einer Hinterkante (21) versehen sind, die mit einer Schräge (21A) zum Zusammenwirken mit einem Keilelement zum Sichern der Lagerböcke (15; 115) in den Lageraufnahmen gegen horizontales Verschieben versehen ist.

15. Kettenradanordnung nach Anspruch 14, **dadurch gekennzeichnet, dass** die Lagerschalen (16) zumindest an einer Seite mit einer im Wesentlichen ebenen Stirnfläche (41) versehen sind, an der wenigstens ein Vorsprung (42) zur Drehmomentabstützung ausgebildet ist.

## Claims

1. A tail station for a scraper chain conveyer, in particular a tail station for a transfer conveyer, comprising a machine frame (5) having bearing holders, which are open at the margins, for a demountable chain wheel assembly (10), with a chain wheel assembly (10) having a chain wheel shaft (13), a reversing chain wheel (11) and bearing shells (16) for rotatably bearing the chain wheel shaft (13), and comprising at least one deflector element (50) assigned to the reversing chain wheel (11), **characterized in that** the bearing holders (14; 114) are configured on cantilever arms (12; 112) connected to the machine frame (5) and are upwardly open, the chain wheel assembly (10; 110) being provided on the bearing shells (16; 116) with bearing blocks (15; 115) which are insertable with horizontal motional play into the bearing holders (14; 114) and are horizontally displaceable in the bearing holders (14; 114) between a removal position and a locking position.

2. The tail station according to claim 1, **characterized in that** the bearing shells (16) have inner sides having a reach-through opening for the chain wheel shaft (13) and outer sides (16A) on which the bearing blocks (15) are configured as axial end journals of the chain wheel assembly (10).

3. The tail station according to claim 1 or 2, **characterized in that** each bearing block (15; 115) is securable against horizontal displacement by a wedge element (30; 130) in the bearing holder (14; 114).

4. The tail station according to one of claims 1 to 3, **characterized in that** the bearing holders (14) respectively have a substantially rectangular cross section with a front face wall (17) and a rear wall (19) as well as a bottom wall (18), and **in that** the bearing block (15) is respectively provided with a front edge (20), a bottom edge (22) and a back edge (21), wherein the back edge (21) is provided with a bevel (21 A).

5. The tail station according to one of claims 1 to 4, **characterized in that** the bearing shells (16) are provided at least on one side with a substantially flat front face (41), on which at least one projection (42) is configured for torque-supporting purposes, which projection in the locking position bears against a supporting shoulder (37) present on a machine frame side.

6. The tail station according to claim 5, **characterized in that** the bearing shells (16) have two mutually spaced projections (42) which are slidable in a clamp-like manner onto a supporting block (38) on the machine frame (5).

7. The tail station according to one of claims 1 to 7, **characterized in that** the cantilever arms (12) and/or the supporting block (38) are fastened detachably to the machine frame (5).

8. The tail station according to one of claims 1 to 7, **characterized in that** the at least two cantilever arms (12; 112) are part of a bracket (60; 160) which is exchangeably fastenable, particularly screwable, to the machine frame (5).

9. The tail station according to one of claims 1 to 7, **characterized in that** the chain deflector elements (50) are provided with at least one deflector tongue (52, 53) on a deflector element front side (51) and with a locking lug (54) on a deflector element rear side.

10. The tail station according to claim 8, **characterized by** a cover plate (35) which in the assembly state overlaps the bearing holders (14) and overlaps the locking lugs (54) of the chain deflector elements (50).

11. The tail station according to claim 9 or 10, **characterized in that** the chain deflector elements (50) are held solely by positive locking between the locking lug (54), the machine frame (5) and the cover plate (35), wherein preferably the locking lug (54) is provided with at least one semi-circular groove (55; 58) for pivotal engagement or retentive engagement on a round ledge (56).

12. The tail station according to one of claims 1 to 11, **characterized in that** a wedge element (130) is provided for the positional securement of the bearing blocks (115) in the closing position, the wedge element having at least one or exactly one through bore (171) for a clamping bolt (170), wherein preferably the wedge element (130) is provided to both sides of the through bore (171) with threaded bores (176) for the screwing-in of release bolts.

13. The tail station of one of claims 1 to 12, **characterized in that** the cantilever arms (112) are provided with a plug-in opening (192) for a holding dowel (190) for supporting a clamping bolt (170) in the bearing holder (114).

14. A chain wheel assembly for a tail station according to one of claims 1 to 13, comprising a chain wheel shaft (13), at least one reversing chain wheel (11; 111), and bearing shells (60) for rotatably bearing the chain wheel shaft (13), **characterized in that** the bearing shells (16; 116) are provided on outer sides (16A) with bearing blocks (15; 115), which form axial end journals of the chain wheel assembly (10; 110) and are insertable from above into the bearing holders with horizontal motional play, wherein the bearing blocks (15) are provided with a front edge (20), a bottom edge (22), and a back edge (21) being provided with a bevel (2 1 A) for collaborating with a wedge element for securing the bearing blocks (15; 115) in the bearing holders against horizontal displacement.

15. The chain wheel assembly according to claim 14, **characterized in that** the bearing shells (16) are provided at least on one side with a substantially flat front face (41), on which at least one projection (42) is configured for torque-supporting purposes.

## Revendications

1. Station de renvoi pour un convoyeur à chaîne à raclettes, en particulier une station de renvoi pour un convoyeur de transfert, avec un châssis de machine (5) avec des logements de palier à bords ouverts pour un ensemble de roues à chaîne (10) démontable, avec un ensemble de roues à chaîne (10) avec un arbre de pignon à chaîne (13), avec une roue à chaîne inversible (11) ainsi que des coussinets de palier (16) pour le logement rotatif de l'arbre de roue à chaîne (13), et avec au moins un déviateur (50) associé à la roue à chaîne inversible (11), **caractérisée en ce que** les logements de palier (14; 114) sont constitués de bras en porte-à-faux (12; 112) liés au châssis de machine (5) et sont ouverts vers le haut, où l'ensemble de roues à chaîne (10 ; 110) est pourvu de supports de palier (15 ; 115) sur les coussinets de palier (16 ; 116), qui sont insérables dans les logements de palier (14 ; 114) avec un jeu horizontal et déplaçables horizontalement dans les logements de palier (14 ; 114) entre une position d'extraction et une position de verrouillage.

2. Station de renvoi selon la revendication 1, **caractérisée en ce que** les coussinets de palier (16) comportent des faces intérieures avec des ouvertures de passage pour l'arbre de roue à chaine (13) et des faces extérieures (16A), sur lesquelles sont agencés les supports de palier (15) en tant que pivots d'extrémité axiaux de l'ensemble de roues à chaine(10).

3. Station de renvoi selon la revendication 1 ou 2, **caractérisée en ce que** chaque support de palier (15 ; 115) est bloqué en déplacement horizontal dans le logement de palier (14 ; 114) au moyen d'un élément de calage (30 ; 130).

4. Station de renvoi selon l'une quelconque des revendications 1 à 3, **caractérisée en ce que** les logements de palier (14) présentent respectivement une coupe transversale sensiblement rectangulaire avec une paroi avant (17), une paroi arrière (19), et une paroi inférieure (18), et **en ce que** les supports de palier (15) sont respectivement pourvus d'un bord avant (20), d'un bord inférieur (22) et d'un bord arrière (21), où le bord arrière (21) est de préférence pourvu d'une inclinaison (2 1 A).

5. Station de renvoi selon l'une quelconque des revendications 1 à 4, **caractérisée en ce que** les coussinets de palier (16) sont pourvus sur au moins un côté d'une surface avant (41) sensiblement plane, sur laquelle est agencée au moins une protubérance (42) pour supporter le couple de rotation, qui s'appuie en position de verrouillage sur un épaulement d'appui (37) du côté du châssis de machine.

6. Station de renvoi selon la revendication 5, **caractérisée en ce que** les coussinets de palier (16) comportent deux protubérances (42) espacées l'une de l'autre, qui peuvent être introduites de manière clipsable dans un bloc de support (38) sur le châssis de machine (5).

7. Station de renvoi selon l'une quelconque des revendications 1 à 7, **caractérisée en ce que** les bras en porte-à-faux (12) et/ou le bloc de support (38) sont fixés de manière amovible au châssis de machine (5).

8. Station de renvoi selon l'une quelconque des revendications 1 à 7, **caractérisée en ce que** au moins les deux bras en porte-à-faux (12 ; 112) font partie d'une console (60 ; 160), qui peut être fixée de manière interchangeable au châssis de machine (5), en particulier par vissage.

9. Station de renvoi selon l'une quelconque des revendications 1 à 7, **caractérisée en ce que** les éléments déviateurs à chaîne (50) sont pourvus d'au moins une languette de déviation (52, 53) sur une face avant de l'élément (51) et d'un épaulement de verrouillage (54) sur une face arrière de l'élément.

10. Station de renvoi selon la revendication 8, **caractérisée par** une plaque de couverture (35) qui recouvre à l'état monté les logements de palier (14) et qui recouvre les épaulements de verrouillage (54) des éléments déviateurs à chaîne (50).

11. Station de renvoi selon la revendication 9 ou 10, **caractérisée en ce que** les éléments déviateurs à chaîne (50) sont maintenus uniquement par complémentarité de forme entre l'épaulement de verrouillage (54), le châssis de machine (5) et la plaque de couverture (35), où l'épaulement de verrouillage (54) est de préférence pourvu d'au moins une rainure semi-circulaire (55 ; 58) pour une prise pivotante ou une prise de soutien à un profil rond(56).

12. Station de renvoi selon l'une quelconque des revendications 1 à 11, **caractérisée en ce qu'**un élément de calage (130) est prévu pour le blocage en position du support de palier (115) en position de fermeture, qui comporte au moins un ou exactement un trou traversant (171) pour une vis de serrage (170), où l'élément de calage (130) est de préférence pourvu de trous taraudés (176) des deux côtés du trou traversant (171) pour le vissage de vis démontables.

13. Station de renvoi selon l'une quelconque des revendications 1 à 12, **caractérisée en ce que** les bras en porte-à-faux (112) sont pourvus d'une ouverture d'insertion (192) pour une cheville de fixation (190) pour la contre-butée d'une vis de serrage (170) dans le logement de palier (114).

14. Ensemble de roues à chaîne pour une station de renvoi selon l'une quelconque des revendications 1 à 13, avec un arbre de pignon à chaîne (13), avec au moins une roue à chaîne inversible (11 ; 111) et avec des coussinets de palier (16) pour le logement rotatif de l'arbre de roue à chaîne (13), **caractérisé en ce que** les coussinets de palier (16 ; 116) sont pourvus de supports de palier (15 ; 115) sur les faces extérieures (16A), qui forment les pivots d'extrémité axiaux de l'ensemble de roues à chaine (10 ; 110) et qui sont insérables par le dessus dans des logements de palier sur la station de renvoi et avec un jeu horizontal, où les supports de palier (15) sont pourvus d'un bord avant (20), d'un bord inférieur (22) et d'un bord arrière (21), qui est pourvu d'une inclinaison (21A) pour coopérer avec un élément de calage pour bloquer en déplacement horizontal les supports de palier (15 ; 115) dans les logements de palier.

15. Ensemble de pignon à chaîne selon la revendication 14, **caractérisé en ce que** les coussinets de palier (16) sont pourvus sur au moins un côté d'une surface avant (41) sensiblement plane, sur laquelle est agencée au moins une protubérance (42) pour supporter le couple de rotation.
